# EUROPÄISCHE PATENTSCHRIFT

(11) **EP 0 455 066 B1**
(45) Veröffentlichungstag und Bekanntmachung des Hinweises auf die Patenterteilung: **03.11.1993**
(21) Anmeldenummer: 91106290.9
(22) Anmeldetag: 19.04.1991
(51) Int. Cl.: C08G 69/28

(54) **Verfahren zur Herstellung von linearen Polyamiden**
Manufacturing process of linear polyamides
Procédé de fabrication de polyamides linéaires

(30) Priorität: 30.04.1990 DE 4013873
(43) Veröffentlichungstag der Anmeldung: 06.11.1991
(73) Patentinhaber: BASF Aktiengesellschaft, 67063 Ludwigshafen (DE)
(72) Erfinder: Pipper, Gunter, W-6702 Bad Duerkheim (DE); Mueller, Wolfgang F., Dr., W-6730 Neustadt (DE); Dauns, Harald, Dr., W-6719 Weisenheim (DE)

(56) Entgegenhaltungen:
- EP-A- 0 129 196
- EP-A- 0 306 165
- US-A- 4 442 260

## Beschreibung

In der Regel werden lineare Polyamide, aufgebaut aus Diaminen und Dicarbonsäuren, durch Kondensation der entsprechenden Salze in der Schmelze hergestellt. Für besonders temperaturempfindliche Polyamide ist eine solche Arbeitsweise weniger geeignet. Es wurde deshalb auch schon versucht, Polyamide aus den entsprechenden Salzen durch Kondensation in fester Phase herzustellen. Aus der EP-A 306 165 ist ein solches Verfahren bekannt, bei dem man Nylonsalze mit einem Hypophosphitkatalysator intensiv mischt und dann dieses Gemisch in feiner Dispersion in einem Kohlenwasserstoff bei einer Temperatur unterhalb des Schmelzpunktes des Salzes kondensiert. Ein solches Verfahren hat den Nachteil, daß so erhaltenes Polyamid von dem als Wärmeträger benützten Kohlenwasserstoff gereinigt werden muß und andererseits die verwendeten Kohlenwasserstoffe wieder aufgearbeitet werden müssen.

Es war deshalb die technische Aufgabe gestellt, ein Verfahren zur Herstellung von linearen Polyamiden durch Kondensation von Nylonsalzen in fester Phase zur Verfügung zu stellen, das einfach durchzuführen und leicht steuerbar ist, bei dem keine aufwendigen Reinigungsoperationen erforderlich sind.

Diese Aufgabe wird gelöst in einem Verfahren zur Herstellung von linearen Polyamiden, aufgebaut aus Diaminen mit 4 bis 15 Kohlenstoffatomen und Dicarbonsäuren mit 4 bis 15 Kohlenstoffatomen, durch Kondensieren der entsprechenden Salze in Gegenwart von Phosphor enthaltenen Katalysatoren in fester Phase, wobei man
a) Diamine mit 4 bis 15 Kohlenstoffatomen und Dicarbonsäuren mit 4 bis 15 Kohlenstoffatomen in einem flüssigen Reaktionsmedium bei erhöhter Temperatur umsetzt und hierbei katalytisch wirksame Phosphorverbindungen zugibt und eine Lösung, Suspension oder Dispersion von Salzen der genannten Diamine und Dicarbonsäuren mit einem Gehalt von katalytisch wirksamen Phosphorverbindungen erhält,
b) aus der in a) erhaltenen Lösung, Suspension oder Dispersion von Salzen aus Diaminen und Dicarbonsäuren mit einem Gehalt an katalytisch wirksamen Phosphorverbindungen durch Entfernen des Reaktionsmediums ein festes Salz aus den genannten Diaminen und Dicarbonsäuren mit einem Gehalt an katalytisch wirksamen Phosphorverbindungen erhält,
c) das in b) erhaltene feste Salz aus den genannten Diaminen und Dicarbonsäuren mit einem Gehalt an katalytisch wirksamen Phosphorverbindungen in fester Phase auf eine Temperatur von 130°C bis auf eine Temperatur von 5°C unterhalb des Schmelzpunktes des jeweiligen Salzes unter Mitverwendung von Inertgasen erhitzt und ein Vorkondensat mit einer Endgruppensumme von 5 000 bis 12 000 erhält und
d) das so erhaltene Vorkondensat bis zum gewünschten Kondensationsgrad bei einer Temperatur oberhalb der in Stufe c angewandten Temperatur weiterkondensiert.

Das neue Verfahren hat den Vorteil, daß die verwendeten Katalysatoren gleichmäßig verteilt sind. Weiter hat das neue Verfahren den Vorteil, daß es auf einfache Weise regelbar ist und keine Reinigung des Polyamids als auch von Wärmeträgerölen erforderlich ist. Ferner hat das neue Verfahren den Vorteil, daß es leicht kontinuierlich gestaltet werden kann.

In der Stufe a) werden Diamine mit 4 bis 15 Kohlenstoffatomen und Dicarbonsäuren mit 4 bis 15 Kohlenstoffatomen in einem flüssigen Reaktionsmedium bei erhöhter Temperatur umgesetzt und katalytisch wirksame Phosphorverbindungen zugegeben und Lösung, Suspension oder Dispersion der entsprechenden Salze mit einem Gehalt an katalytisch wirksamen Phosphorverbindungen erhalten.

Bevorzugt sind Diamine der Formel I

H₂N-R¹-NH₂ I,

in der R¹ einen Alkylenrest mit 2 bis 12 Kohlenstoffatomen einen 1,4-Phenylen, 1,3-Phenylen oder einen Rest der Formel II 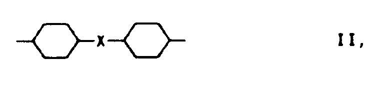
in der X ein Sauerstoffatom, eine Methylengruppe eine Propylen-2,2-Gruppe, ein Schwefelatom oder die Gruppe -SO₂- bezeichnet. Besonders bevorzugte Diamine sind α,ω-Alkandiamine, insbesondere solche mit gerader Kohlenstoffkette. Geeignete Diamine sind beispielsweise Diaminobutan-1,4, Hexamethylendiamin, Octamethylendiamin, Dekamethylendiamin, 4,4'-Diaminodicyclohexylmethan, 4,4'-Diaminocyclohexylpropan-2,2, 4,4'-Dicyclohexylether, p-Phenylendiamin und m-Phenylendiamin.

In bevorzugten Dicarbonsäuren der Formel III

HOOC-R²-COOH

bedeutet R² einen Alkylenrest mit 2 bis 12 Kohlenstoffatomen, einen 1,3-Phenylenrest oder 1,4-Phenylenrest. Geeignete Verbindungen sind beispielsweise Bernsteinsäure, Adipinsäure, Sebacinsäure, Acelainsäure, Terephthalsäure oder Isophthalsäure.

Als flüssiges Reaktionsmedium z.B. mit einem Siedepunkt von 60 bis 120°C eignen sich vorteilhaft Wasser, Alkanole mit 1 bis 4 Kohlenstoffatomen, deren Gemische oder Ketone wie Aceton oder Butanon. In Abhängigkeit von der Löslichkeit der Salze in dem verwendeten Reaktionsmedium erhält man eine Lösung, Suspension oder Dispersion des jeweiligen Salzes. Salze aus den genannten Diaminen und Dicarbonsäuren werden vorzugsweise in wäßriger Lösung hergestellt. Hierbei geht man beispielsweie von wäßrigen Lösungen von Dicarbonsäuren, die einen Gehalt von mehr als 10 Gew.-% insbesondere mehr als 20 Gew.-% haben, aus. Besonders vorteilhaft sind die wäßrigen Lösungen möglichst gesättigt. Solche wäßrigen Lösungen werden dann mit geschmolzenen Diaminen umgesetzt. Es ist auch möglich von einer wäßrigen Lösung von Diaminen, die vorteilhaft einen Gehalt von über 10 Gew.-% haben, auszugehen und diese wäßrige Lösung mit festen Dicarbonsäuren umzusetzen. Nach einer anderen Arbeitsweise geht man von verdünnten Lösungen solcher Salze aus, löst darin Dicarbonsäuren und neutralisiert diese dann mit Diaminen.

Es versteht sich, daß man Dicarbonsäuren und Diamine in stöchiometrischen Mengen anwendet. Vorteilhaft führt man die Umsetzungen bei einer Temperatur von 20 bis 100°C, insbesondere von 60 bis 95°C durch. Der pH-Wert der erhaltenen Lösung beträgt vorteilhaft von 7,0 bis 7,8. Ferner hat es sich als vorteilhaft erwiesen, jeweils konzentrierte Lösungen der Salze herzustellen.

Während oder nach der Herstellung der Salze werden katalytisch wirksame Phosphorverbindungen zugesetzt. Geeignete Phosphorverbindungen sind z.B. Phosphorsäure, phosphorige Säure oder hypophosphorige Säure sowie deren Ester oder Alkalisalze. Bevorzugte Phosphorverbindungen sind phosphorige Säure und deren Alkalisalze oder Ester, z.B. von Alkanolen mit bis zu 12 Kohlenstoffatomen, Cycloalkanolen oder Phenolen. Geeignete Verbindungen sind beispielsweise Triphenylphosphit. Besonders geeignet sind Salze und Abkömmlinge der hypophosphorigen Säure, z.B. deren Alkalisalz, wie Natriumhypophosphit oder Ammoniumhypophosphit.

Vorteilhaft setzt man die katalytisch wirksamen Phosphorverbindungen in einer Menge von 0,05 bis 1,0 Gew.-%, insbesondere 0,1 bis 0,7 Gew.-%, berechnet als Phosphor und bezogen auf das feste Salz aus Dicarbonsäuren und Diaminen, ein.

Man erhält so eine Suspension, Dispersion oder Lösung von Salzen aus den vorgenannten Diaminen und Dicarbonsäuren mit einem Gehalt von katalytisch wirksamen Phosphorverbindungen.

In der Stufe b) wird aus der in a) erhaltenen Lösung, Suspension oder Dispersion von Salzen aus Diaminen und Dicarbonsäuren mit einem Gehalt an katalytisch wirksamen Phosphorverbindungen durch Entfernen des Reaktionsmediums ein festes Salz aus Diaminen und Dicarbonsäuren mit einem Gehalt an den vorgenannten katalytisch wirksamen Phosphorverbindungen erhalten.

Zweckmäßig gewinnt man das feste Salz durch Eindampfen unter fortlaufender Bewegung z.B. in einem Rotavapor oder durch Sprühtrocknen. Vorteilhaft wendet man hierbei eine Temperatur an, die 120°C nicht überschreitet. Man erhält hierbei ein festes Salz aus den vorgenannten Diaminen und Dicarbonsäuren mit dem beschriebenen Gehalt an katalytisch wirksamen Phosphorverbindungen. Für die weiteren Verwendungen werden die festen Salze vorteilhaft pulverisiert oder zu Formlingen wie Granulat, Tabletten oder Kugeln geformt, z.B. Formlingen 2-4 mm Länge und 2-4 mm Durchmesser oder Kugeln mit 1-2 mm Durchmesser.

In der Stufe c) wird das in b) erhaltene feste Salz aus den vorgenannten Diaminen und Dicarbonsäuren mit einem Gehalt an katalytisch wirksamen Phosphorverbindungen in fester Phase auf eine Temperatur von 130°C bis 5°C unterhalb des Schmelzpunktes des jeweiligen Salzes unter Mitverwendung von Inertgasen erhitzt und ein Vorkondensat mit einer Endgruppensumme von 5000 bis 12000 erhalten. Vorzugsweise überschreitet die Temperatur bei der Vorkondensation jedoch nicht 180°C.

Vorteilhaft erhitzt man in fester Phase auf eine Temperatur von 140°C bis 10°C unterhalb des Schmelzpunktes des jeweiligen Salzes. Als Inertgase verwendet man vorteilhaft Stickstoff oder insbesondere überhitzten Wasserdampf.

Sofern pulverisierte Salze kondensiert werden, wird die Kondensation unter fortlaufender Durchmischung z.B. im Rotavapor oder in Wirbelschicht durchgeführt. Hierbei wird durch das mitverwendete Inertgas, das bei der Kondensation entstehende Wasser fortlaufend abgeführt und stets eine feste Phase aufrechterhalten.

Sofern Formlinge aus den genannten Salzen verwendet werden, führt man die Kondensation z.B. in schachtförmigen Kondensationszonen durch, wobei die Formlinge den Schacht von oben nach unten durchwandern, während Inertgase von unten nach oben geleitet werden oder in Drehrohröfen, in denen Inertgas im Gegenstrom geführt wird.

Die Kondensationsdauer beträgt in der Regel 10 bis 24 h. Man erhält ein Vorkondensat mit einer Endgruppensumme von 5 000 mäq/Kg bis 12 000 mäq/Kg, insbesondere 7 000 mäq/Kg bis 10 000 mäq/Kg. Bei Erreichen dieser Endgruppensumme wird die Vorkondensation zweckmäßig beendet.

Das in der Stufe c) erhaltene Vorkondensat wird anschließend bis zu dem gewünschten Kondensationsgrad bei einer Temperatur oberhalb der in Stufe c angewandten Temperatur weiterkondensiert, vorteilhaft über 180°C bis 30°C oberhalb des Schmelzpunktes des Polyamids.

Vorteilhaft führt man die Weiterkondensation in fester Phase, z.B. bei einer Temperatur oberhalb des Schmelzpunktes des Salzes bis 20°C unterhalb dem Schmelzupunkt des erzeugten Polyamids durch. Hierbei werden zweckmäßig Inertgase wie Stickstoff oder überhitzter Wasserdampf mitverwendet. Es hat sich besonders bewährt, wenn man das Erhitzten stufenweise durchführt, z.B. in 2 bis 4 Stufen von jeweils von 5 bis 15°C. Dieses stufenweise Erhitzen erlaubt eine genaue Kontrolle des Kondensationsgrades, was unschwer an der Endgruppensumme feststellbar ist. Sofern in Pulverform kondensiert wurde, ist es zweckmäßig, gegebenenfalls unter Zugabe von Zusatzstoffen das Polyamid zu schmelzen z.B. im Extruder und zu granulieren.

Nach einer anderen vorteilhaften Arbeitsweise wird das Vorkondensat aus der Stufe c aufgeschmolzen, z.B. in einem Extruder, und granuliert. Hierbei hält man vorteilhaft eine Verweilzeit in schmelzflüssigem Zustand von < 4 Minuten, insbesondere 1 bis 3 Minuten ein. Es hat sich auch als vorteilhaft erwiesen, in die Polyamidschmelze Zusatzstoffe wie Farbstoffe, Stabilisatoren, Schmiermittel, Füll- und Verstärkungsmittel einzuarbeiten. Das so erhaltene Granulat wird dann in fester Phase unter Mitverwendung von Inertgasen wie oben beschrieben bis zum gewünschten Kondensationsgrad weiterkondensiert.

Andererseits ist es jedoch auch möglich, das in der Stufe c) erhaltene Vorkondensat aufzuschmelzen z.B. im Extruder und gegebenenfalls nach Zugabe von vorgenannten Zusatzstoffen in der Schmelze durch fortlaufende Ausbildung neuer Oberflächen und Abführungen des Reaktionswassers vorteilhaft unter vermindertem Druck bis zur gewünschten Viskosität zu kondensieren.

Die nach dem erfindungsgemäßen Verfahren erhältlichen Polyamide eignen sich zur Herstellung von Formkörpern durch Spritzgießen oder Extrusionen oder zur Herstellung von Fäden von Fasern.

Das Verfahren nach der Erfindung sei an folgenden Beispielen veranschaulicht.

### Beispiele

### Beispiel 1

### Einsatzstoffe:

1. 1608.00 g VE-Wasser
2. 1162.10 g Hexamethylendiamin (10 Mol)
3. 1461.40 g Adipinsäure (10 Mol)
4. 21.56 g H₃PO₂ = 0,447 % Phosphor bezogen auf Polymer

### Durchführung der Salzherstellung:

Die Einsatzstoffe werden der Reihe nach in einen 5 l Rührbehälter eingetragen und bei 75-95°C neutralisiert. Der wäßrigen Salzlösung wird anschließend die Phosphorverbindung zugefügt. Die klare Lösung wird danach im Rotationsverdampfer aufkonzentriert und im Vacuumtrockenschrank bei 60°C und 20 mbar getrocknet (Wassergehalt < 0,1 %). Das so hergestellte Salz wird homogenisiert und
a) direkt in Pulverform der Vorkondensation zugeführt oder,
b) vor der Vorkondensation in Formlinge überführt.

### Vorkondensation:

10 h, 160°C, 100 l/h Stickstoff als Inertgas
4 h, 170°C, 50 l/h Stickstoff als Inertgas

Als Endgruppensumme des Vorkondensats wurden 5200 mäq/kg gemessen.

### Nachkondensation:

5 h, 180°C , 50 l/h Stickstoff als Inertgas
6 h, 190°C , 50 l/h Stickstoff als Inertgas
3 h, 198°C , 50 l/h Stickstoff als Inertgas

Als Endprodukt erhält man a) ein weißes Pulver, b) ein weißes Granulat, mit einer Endgruppensumme von 260 - 270 mäq/kg und einer η rel (1 %ig gemessen in 96 %iger Schwefelsäure) von 2.52 - 2.54.

### Beispiel 2

### Einsatzstoffe:

1. 1608.00 g VE-Wasser
2. 1162.10 g Hexamethylendiamin (10 Mol)
3. 1461.40 g Adipinsäure (10 Mol)
4. 95.80 g Triphenylphosphat = 0,4 % Phosphor bezogen auf Polymer

### Durchführung der Salzherstellung:

Wie Beispiel 1 und anschließende Formgebung wie in 1b)

### Vorkondensation:

10 h, 160°C, 100 l/h Stickstoff als Inertgas
4 h, 170°C, 50 l/h Stickstoff als Inertgas

Als Endgruppensumme des Vorkondensats wurden 8200 mäq/kg gemessen.

### Nachkondensation:

7 h, 180°C , 50 l/h Stickstoff als Inertgas
7 h, 190°C , 50 l/h Stickstoff als Inertgas
4 h, 200°C , 50 l/h Stickstoff als Inertgas

Als Endprodukt erhält man ein weißes Polymergranulat, mit einer Endgruppensumme von 320 - 330 mäq/kg und einer η rel (1 %ig gemessen in 96 %iger Schwefelsäure) von 2.40 - 2.45.

### Beispiel 3

### Einsatzstoffe:

1. 1608.00 g VE-Wasser
2. 1162.10 g Hexamethylendiamin (10 Mol)
3. 1461.40 g Adipinsäure (10 Mol)
4. 24.50 g NaH₂PO₂ x H₂O = 0,29 % Phosphor bezogen auf Polymer

### Durchführung der Salzherstellung:

Wie Beispiel 1 und Formgebung wie in 1b)

### Vorkondensation:

8 h, 160°C, 100 l/h Stickstoff als Inertgas
7 h, 170°C, 100 l/h überhitzter Wasserdampf als Inertgas

Als Endgruppensumme des Vorkondensats wurden 7100 mäq/kg gemessen.

### Nachkondensation:

7 h, 180°C , 50 l/h überhitzter Wasserdampf als Inertgas
8 h, 190°C , 50 l/h überhitzter Wasserdampf als Inertgas
6 h, 200°C , 50 l/h überhitzter Wasserdampf als Inertgas

Als Endprodukt erhält man ein weißes Polymergranulat, mit einer Endgruppensumme von 290 - 295 mäq/kg und einer η rel (1 %ig gemessen in 96 %iger Schwefelsäure) von 2.40 - 2.45, einem Restextrakt in Methanol von 0,74 % und ein DSC - Fp. von 258°C.

### Beispiel 4

### Einsatzstoffe:

1. 15000.00 g VE-Wasser
2. 11600.00 g Hexamethylendiamin
3. 7300.00 g Adipinsäure
4. 8300.00 g Terephthalsäure
5. 110.40 g H₃PO₃

### Durchführung der Salzherstellung:

Die Einsatzstoffe wurden der Reihe nach in einen 100 l Rührkessel bei 95 - 98°C eingetragen und neutralisiert. Der pH-Wert der Salzlösung betrug 7,6. Die phosphorige Säure wird der klaren Salzlösung beigegeben und anschließend wie in Beispiel 1a) verfahren.

### Vorkondensation:

100 l Rotationsverdampfer
10 h, 170°C, 500 l/h Stickstoff als Inertgas
8 h, 180°C, 500 l/h überhitzter Wasserdampf als Inertgas

Als Endgruppensumme des Vorkondensats wurden 7600 - 8000 mäq/kg gemessen.

### Nachkondensation:

5 h, 190°C , 500 l/h überhitzter Wasserdampf als Inertgas
6 h, 200°C , 500 l/h überhitzter Wasserdampf als Inertgas
4 h, 210°C , 500 l/h überhitzter Wasserdampf als Inertgas

Als Endprodukt erhält man ein weißes Pulver mit einer Endgruppensumme von 360 - 380 mäq/kg und einer η rel (1 %ig gemessen in 96 %iger Schwefelsäure) von 2.30 - 2.33. Das Pulver wird in einem Doppelschneckenextruder zu Granulat umgeschmolzen. Das erhaltene weiße Granulat hat eine Endgruppensumme von 340 - 348 mäq/kg, eine η rel (1 %ig gemessen in 96 %iger Schwefelsäure) von 2,38 - 2,44 und einen DSC - Fp. von 302°C.

### Beispiel 5

Man stellt ein Salz wie in Beispiel 4 beschrieben her und führt die Vorkondensation wie ausgeführt durch.

Das Vorkondensat mit einer Endgruppensumme von 7600 - 8000 mäq/kg wird einem Doppelschneckenextruder zugeführt, bei einer Massetemperatur bis max. 340°C aufgeschmolzen, anschließend im Wasserbad verfestigt und granuliert. Das Granulat mit einer Endgruppensumme von 700 - 800 mäq/kg, einer η rel von 1,5 - 1,6 (1 %ig gemessen in 96 %iger Schwefelsäure) wurde anschließend in fester Phase, mit überhitztem Wasserdampf als Inertgas, bei 210°C, während 7 h, zur gewünschten Viscosität nachkondensiert. Die Endgruppensumme betrug 130 - 150 mäq/kg, die η rel (1 %ig gemessen in 96 %iger Schwefelsäure) 2,7 - 2,8 und der DSC - Fp. 304°C.

## Patentansprüche

1. Verfahren zur Herstellung von linearen Polyamiden, aufgebaut aus Diaminen mit 4 bis 15 Kohlenstoffatomen und Dicarbonsäuren mit 4 bis 15 Kohlenstoffatomen durch Kondensieren der entsprechenden Salze in Gegenwart von katalytisch wirksamen Phosphorverbindungen in fester Phase, dadurch gekennzeichnet, daß man
a) Diamine mit 4 bis 15 Kohlenstoffatomen und Dicarbonsäuren mit 4 bis 15 Kohlenstoffatomen in einem flüssigen Reaktionsmedium bei erhöhter Temperatur umsetzt und hierbei katalytisch wirksame Phosphorverbindungen zugibt und eine Lösung, Suspension oder Dispersion von Salzen der genannten Diamine und Dicarbonsäuren mit einem Gehalt von katalytisch wirksamen Phosphorverbindungen erhält,
b) aus der in a) erhaltenen Lösung, Suspension oder Dispersion von Salzen aus Diaminen und Dicarbonsäuren mit einem Gehalt an katalytisch wirksamen Phosphorverbindungen durch Entfernen des Reaktionsmediums ein festes Salz aus den genannten Diaminen und Dicarbonsäuren mit einem Gehalt an katalytisch wirksamen Phosphorverbindungen erhält,
c) das in b) erhaltene feste Salz aus den genannten Diaminen und Dicarbonsäuren mit einem Gehalt an katalytisch wirksamen Phosphorverbindungen in fester Phase auf eine Temperatur von 130°C bis 5°C unterhalb des Schmelzpunktes des jeweiligen Salzes unter Mitverwendung von Inertgasen erhitzt und ein Vorkondensat mit einer Endgruppensumme von 5000 mäq/Kg bis 12000 mäq/Kg erhält, und
d) das so erhaltene Vorkondensat bis zum gewünschten Kondensationsgrad bei einer Temperatur oberhalb der in Stufe c angewandten Temperatur weiterkondensiert.

2. Verfahren nach Anspruch 1, dadurch gekennzeichnet, daß man katalytisch wirksame Phosphorverbindungen in einer Menge von 0,01 bis 1,0 Gew.-%, berechnet als Phosphor und bezogen auf das feste Salz aus Diaminen und Dicarbonsäuren, zusetzt.

3. Verfahren nach den Ansprüchen 1 und 2, dadurch gekennzeichnet, daß man hypophosphorige Säure und deren Salze verwendet.

4. Verfahren nach den Ansprüchen 1 bis 3, dadurch gekennzeichnet, daß man in Stufe a) die Umsetzung in wäßrigem Medium durchführt.

5. Verfahren nach den Ansprüchen 1 bis 4, dadurch gekennzeichnet, daß man bei der Kondensation in Stufe c) eine Temperatur von 140°C bis 10 °C unterhalb des Schmelzpunktes des jeweiligen Salzes einhält.

6. Verfahren nach den Ansprüchen 1 bis 5, dadurch gekennzeichnet, daß man in der Stufe c) überhitzten Wasserdampf mitverwendet.

7. Verfahren nach den Ansprüchen 1 bis 6, dadurch gekennzeichnet, daß man in der Stufe d) in fester Phase bei einer Temperatur oberhalb des Schmelzpunktes des jeweiligen Salzes bis 10°C unterhalb des Schmelzpunktes des jeweiligen Polyamids weiterkondensiert.

8. Verfahren nach den Ansprüchen 1 bis 7, dadurch gekennzeichnet, daß man in der Stufe d) die Temperatur stufenweise um jeweils 5 bis 15°C erhöht.

9. Verfahren nach den Ansprüchen 1 bis 8, dadurch gekennzeichnet, daß man in der Stufe d) Inertgase mitverwendet.

10. Verfahren nach den Ansprüchen 1 bis 6, dadurch gekennzeichnet, daß man das in Stufe c) erhaltene Vorkondensat aufschmilzt und granuliert und das erhaltene Granulat unter Mitverwendung von Inertgas in fester Phase weiterkondensiert.

11. Verfahren nach den Ansprüchen 1 bis 6, dadurch gekennzeichnet, daß man das in Stufe c) erhaltene Vorkondensat aufschmilzt und in schmelzflüssigem Zustand weiterkondensiert.

## Claims

1. A process for preparing a linear polyamide formed from a diamine of from 4 to 15 carbon atoms and a dicarboxylic acid of from 4 to 15 carbon atoms by solid phase condensation of the corresponding salt in the presence of a catalytically active phosphorus compound, which comprises
a) reacting the diamine of from 4 to 15 carbon atoms and the dicarboxylic acid of from 4 to 15 carbon atoms in a liquid reaction medium at elevated temperature with the addition of a catalytically active phosphorus compound and obtaining a solution, suspension or dispersion of the salt of said diamine and dicarboxylic acid containing an amount of catalytically active phosphorus compound,
b) removing the reaction medium from the solution, suspension or dispersion obtained in a) to leave a solid salt formed from said diamine and dicarboxylic acid and containing an amount of catalytically active phosphorus compound,
c) heating the solid salt obtained in b) in solid phase to a temperature of from 130°C to 5°C below the melting point of said salt in the presence of an inert gas to obtain a precondensate having an end group total of from 5000 meq/kg to 12000 meq/kg, and
d) further condensing the precondensate thus obtained to the desired degree of condensation at a temperature above the temperature employed in stage c.

2. A process as claimed in claim 1, wherein the catalytically active phosphorus compound is added in an amount of from 0.01 to 1.0 % by weight, calculated as phosphorus and based on the solid salt formed from the diamine and the dicarboxylic acid.

3. A process as claimed in claim 1 or 2, wherein hypophosphorous acid or a salt thereof is used.

4. A process as claimed in claim 1 or 2 or 3, wherein the reaction of stage a is carried out in an aqueous medium.

5. A process as claimed in claim 1 or 2 or 3 or 4, wherein the condensation of stage c is carried out at a temperature of from 140°C to 10°C below the melting point of the particular salt.

6. A process as claimed in claim 1 or 2 or 3 or 4 or 5, wherein superheated steam is used in stage c.

7. A process as claimed in claim 1 or 2 or 3 or 4 or 5 or 6, wherein the further condensation of stage d is carried out at a temperature of from above the melting point of the particular salt to 10°C below the melting point of the particular polyamide.

8. A process as claimed in claim 1 or 2 or 3 or 4 or 5 or 6 or 7, wherein the temperature of stage d is increased step by step by 5-15°C at a time.

9. A process as claimed in claim 1 or 2 or 3 or 4 or 5 or 6 or 7 or 8, wherein an inert gas is used in stage d.

10. A process as claimed in claim 1 or 2 or 3 or 4 or 5 or 6, wherein the precondensate obtained in stage c is melted and granulated and the resulting granules are further condensed in the solid phase in the presence of an inert gas.

11. A process as claimed in claim 1 or 2 or 3 or 4 or 5 or 6, wherein the precondensate obtained in stage c is melted and further condensed in the molten state.

## Revendications

1. Procédé de préparation de polyamides linéaires, construits à partir de diamines à 4-15 atomes de carbone et d'acides dicarboxyliques à 4-15 atomes de carbone, par condensation en phase solide des sels correspondants en présence de composés du phosphore à activité catalytique, caractérisé en ce que
a) on fait réagir des diamines à 4-15 atomes de carbone et des acides dicarboxyliques à 4-15 atomes de carbone dans un milieu réactionnel liquide à température élevée, on y ajoute des composés du phosphore à activité catalytique et on obtient une solution, une suspension ou une dispersion de sels de ces diamines et de ces acides dicarboxyliques contenant des composés du phosphore à activité catalytique,
b) à partir de la solution, suspension ou dispersion de sels de diamines et d'acides dicarboxyliques contenant des composés du phosphore à activité catalytique, obtenue en a), on obtient, par élimination du milieu réactionnel, un sel solide desdites diamines et desdits acides dicarboxyliques, contenant des composés du phosphore à activité catalytique,
c) on chauffe le sel solide desdites diamines et desdits acides dicarboxyliques, contenant des composés du phosphore à activité catalytique, obtenu en b), en phase solide entre 130°C et une température inférieure de 5°C au point de fusion du sel en question, avec utilisation simultanée de gaz inertes, et on obtient un produit de précondensation dont la somme de groupements terminaux est comprise entre 5000 meq./kg et 12 000 meq/kg>, et
d) on poursuit la condensation du produit ainsi obtenu jusqu'au degré de condensation désiré, à une température supérieure à celle qui a été appliquée dans l'étape c).

2. Procédé selon la revendication 1, caractérisé en ce qu'on ajoute les composés du phosphore à activité catalytique dans une proportion de 0,01 à 1,0% en poids, calculée en tant que phosphore et par rapport au sel solide de diamines et d'acides dicarboxyliques.

3. Procédé selon la revendication 1 ou 2, caractérisé en ce qu'on utilise de l'acide hypophosphoreux et ses sels.

4. Procédé selon l'une quelconque des revendications 1 à 3, caractérisé en ce que, dans l'étape a), on conduit la réaction en milieu aqueux.

5. Procédé selon l'une quelconque des revendications 1 à 4, caractérisé en ce que, lors de la condensation dans l'étape c), on maintient une température comprise entre 140°C et 10°C de moins que le point de fusion du sel en question.

6. Procédé selon l'une quelconque des revendications 1 à 5, caractérisé en ce qu'on utilise simultanément, dans l'étape c), de la vapeur d'eau surchauffée.

7. Procédé selon l'une quelconque des revendications 1 à 6, caractérisé en ce que, dans l'étape d), on poursuit la condensation en phase solide à une température comprise entre une valeur supérieure au point de fusion du sel en question et une valeur inférieure de 10°C au point de fusion du polyamide en question.

8. Procédé selon l'une quelconque des revendications 1 à 7, caractérisé en ce que, dans l'étape d), on éléve la température par échelons de 5 à 15°C chaque fois.

9. Procédé selon l'une quelconque des revendications 1 à 8, caractérisé en ce que, dans l'étape d), on utilise simultanément des gaz inertes.

10. Procédé selon l'une quelconque des revendications 1 à 6, caractérisé en ce qu'on fond et on granule le produit de précondensation obtenu dans l'étape c) et on poursuit la condensation en phase solide du granulé obtenu, avec utilisation simultanée de gaz inerte.

11. Procédé selon l'une quelconque des revendications 1 à 6, caractérisé en ce qu'on fond le produit de précondensation obtenu dans l'étape c) et on poursuit la condensation à l'état de masse fondue liquide.
